# EUROPÄISCHE PATENTSCHRIFT

(11) **EP 2 127 962 B1**
(45) Veröffentlichungstag und Bekanntmachung des Hinweises auf die Patenterteilung: **03.10.2012**
(21) Anmeldenummer: 09005024.6
(22) Anmeldetag: 04.04.2009
(51) Int. Cl.: B60R 22/18

(54) **Gurtschloss-Befestigungsanordnung für ein Fahrzeug**
Belt clip attachment assembly for a vehicle
Agencement de fixation d'une serrure de ceinture pour un véhicule

(30) Priorität: 29.05.2008 DE 102008025743
(43) Veröffentlichungstag der Anmeldung: 02.12.2009
(73) Patentinhaber: Volkswagen Aktiengesellschaft, 38440 Wolfsburg (DE)
(72) Erfinder: Bageritz, Hans-Uwe, 38542 Leiferde (DE)

(56) Entgegenhaltungen:
- WO-A1-2004/009412
- DE-A1- 10 339 810
- DE-U1- 29 700 908

## Beschreibung

Die Erfindung betrifft eine Gurtschloss-Befestigungsanordnung für ein Fahrzeug nach dem Oberbegriff des Patentanspruches 1.

Bei einer hinteren Sitzbank eines Fahrzeuges kann üblicherweise ein Fahrzeuginsasse über einen mittleren Beckengurt gesichert sein. Das dem mittleren Beckengurt zugeordnete Gurtschloss kann an einer Gurtbandschlaufe angebunden sein, die aus einem Spalt zwischen dem hinteren Rand der Sitzbank und dem unteren Rand der Rückenlehne herausgeführt ist.

Aus der DE 202 00 271 U1 ist eine gattungsgemäße Gurtschloss-Befestigungsanordnung für ein Gurtschloss eines Fahrzeuges bekannt. Die Befestigungsanordnung weist ein im wesentlichen biegeschlaffes Befestigungsband auf, das das Gurtschloss mit dem Fahrzeugaufbau verbindet. Dem Befestigungsband ist ein federelastisches Stützteil zugeordnet, das das Gurtschloss um eine Biegeachse auf eine Sitzfläche im Fahrzeug vorspannt. Das Gurtschloss liegt daher in seiner Nichtgebrauchslage in einer definierten Ablageposition auf der Sitzbank.

Durch das, beispielsweise in das Befestigungsband eingenähte federelastische Stützteil ist dem Gurtschloss zwischen einer Gebrauchslage und der Nichtgebrauchslage ein vorgegebener Schwenkweg aufgezwungen. Zusätzliche, die Handhabung unterstützende Ausgleichsbewegungen des Gurtschlosses, etwa ein Verdrehen, die außerhalb dieses Schwenkweges liegen, sind demgegenüber erschwert.

Aus der DE 103 39 810 A1 ist ein weiterer Gurtschlosshalter für ein Fahrzeug bekannt, der auf ein Halteband aufweist, das mittels eines Einlegeteils ausgesteift ist. Das Einlegeteil ist durch einen Drahtfederkörper gebildet.

Die Aufgabe der Erfindung besteht darin, eine Gurtschloss-Befestigungsanordnung für ein Gurtschloss eines Fahrzeuges bereitzustellen, das betriebssicher am Fahrzeugaufbau gehaltert ist und eine bequeme Handhabung ermöglicht.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patentanspruches 1 weist das federelastische Stützteil zumindest einen Torsionsabschnitt auf, der im Vergleich zum verbleibenden Stützteil eine reduzierte Torsionssteifigkeit aufweist. Das Gurtschloss kann daher nicht nur um die Biegeachse in die Gebrauchsstellung verbracht werden, sondern zusätzlich auch in einer Torsionsrichtung gedreht werden, wodurch dem Gurtschloss mit Bezug auf seine Bewegungsfähigkeit ein zusätzlicher Freiheitsgrad verliehen ist. Außerdem ist das federelastische Stützteil auf Torsion beanspruchbar, ohne dass es im Dauereinsatz zu einer Beschädigung bzw. Bruch des Stützteiles kommt.

Bevorzugt kann der Torsionsabschnitt so gestaltet sein, dass eine Drehbewegung des Gurtschlosses um eine quer zur Biegeachse verlaufende Torsionsachse unterstützt ist. Bei einer Torsionsbeanspruchung des Stützteiles ist es von Vorteil, wenn der Torsionsabschnitt eine Rückstellkraft auf das Stützteil ausübt, wodurch das Stützteil selbsttätig in seine Ruhelage rückstellbar ist. Bevorzugt kann der Torsionsabschnitt daher elastisch nachgiebig gestaltet sein.

In einer Ausführungsform kann der Torsionsabschnitt als gebogener Abschnitt im Stützteil ausgebildet sein, der die Torsionssteifigkeit des Stützteiles schwächt. Der Torsionsabschnitt kann dabei zumindest zu einer in etwa helixartigen Windung gebogen sein, die vorzugsweise quer zur Biegeachse des Stützteiles ausgerichtet sein kann.

Das Stützteil kann beispielhaft mit dem biegeschlaffen Befestigungsband der Befestigungsanordnung vernäht sein. Außerdem kann es einen, dem Fahrzeugaufbau zugewandten Stützschenkel sowie einen, dazu elastisch verstellbaren, dem Gurtschloss zugewandten Stützschenkel aufweisen, die in einer Nichtgebrauchsstellung des Gurtschlosses zueinander abgewinkelt sind.

Für eine leichtgängige Torsion des Gurtschlosses ist es von Vorteil, wenn der Torsionsabschnitt in dem, dem Gurtschloss zugewandten Stützschenkel des Stützteiles ausgebildet ist. Der andere, dem Fahrzeugaufbau zugewandte Stützschenkel des Stützteiles kann dabei zumindest teilweise zwischen dem hinteren Rand einer Fahrzeug-Sitzbank und dem unteren Rand einer zugeordneten Rückenlehne verklemmt sein.

In einer bevorzugten Ausführungsform kann das Stützteil zwei, dem Gurtschloss zugewandte Stützschenkel aufweisen, zwischen denen in Richtung der Biegeachse der, dem Fahrzeugaufbau zugewandte Stützschenkel angeordnet ist. Die beiden, dem Gurtschloss zugewandten Stützschenkel können jeweils endseitige Einhängeabschnitte aufweisen, die in das Gurtschloss eingehängt sind. Die Torsionsachse verläuft daher nicht unmittelbar durch den Torsionsabschnitt. Vielmehr verläuft die Torsionsachse zwischen den beiden, dem Gurtschloss zugewandten Stützschenkel, in denen jeweils ein Torsionsabschnitt angeordnet sein kann.

Hierbei ist es von Bedeutung, dass trotz einer Torsionsbeanspruchung sich das Stützteil nicht aus dem Gurtschloss aushängt. Dies kann erfindungsgemäß durch den Torsionsabschnitt gewährleistet sein, der zu einem Großteil einen Torsionsweg ausgleichen kann, wodurch die auf die Einhängeabschnitte wirkende Torsionsbeanspruchung reduziert ist.

Für den Fall, dass der Torsionsabschnitt eine helixartige Windung ist, kann diese unter Vergrößerung einer Windungsluft auseinander gebogen werden und somit zumindest teilweise einen Torsionsweg aufnehmen.

Bevorzugt ist es, wenn der Torsionsabschnitt mit geringer Baugröße gestaltet ist. Vor diesem Hintergrund kann der bevorzugt als Windung gebildete Torsionsabschnitt zumindest teilweise flach in Anlage mit dem Gurtschloss sein.

Nachfolgend ist ein Ausführungsbeispiel der Erfindung anhand der beigefügten Figuren beschrieben.

Es zeigen:
- Fig. 1: in einer grob schematischen Darstellung ein Gurtschloss in seiner Nichtgebrauchslage, in der es auf einer Sitzfläche einer angedeuteten Sitzbank liegt;
- Fig. 2: in einer Ansicht entsprechend der Fig. 1 das Gurtschloss in einer Gebrauchslage, in der es um 90° nach oben geschwenkt ist;
- Fig. 3: in einer Ansicht entsprechend der Fig. 2 das Gurtschloss bei einer Torsionsbeanspruchung um eine Torsionsachse; und
- Fig. 4: das erfindungsgemäße federelastische Stützteil in Alleinstellung.

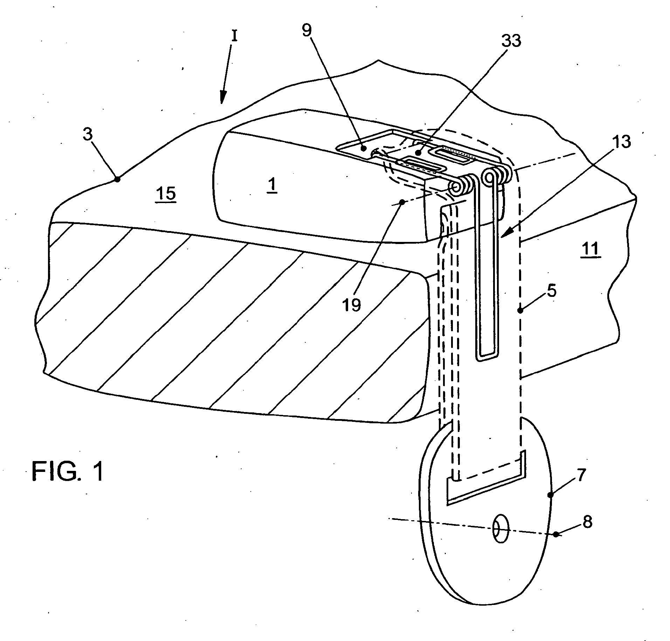

In der Fig. 1 ist eine Gurtschloss-Befestigungsanordnung mit einem Gurtschloss 1 gezeigt. Das Gurtschloss 1 ist hier beispielhaft einem nicht dargestellten mittleren Beckengurt einer angedeuteten hinteren Sitzbank 3 zugeordnet. Das Gurtschloss 1 ist über ein Befestigungsband 5 am Fahrzeugaufbau verankert. Beispielhaft ist hier das Befestigungsband 5 eine Gurtbandschlaufe, die einerseits durch eine Öse eines Beschlagteils 7 geführt ist, das über eine angedeutete Verschraubung 8 am Fahrzeugaufbau befestigt ist. Andererseits ist die geschlossene Gurtbandschlaufe 5 durch eine Halteöse 9 des Gurtbandschlosses 1 geführt.

Die Gurtbandschlaufe 5 ist im wesentlichen biegeschlaff, das heißt mit nur geringer Formsteifigkeit versehen, und gemäß der Fig. 1 zwischen einem hinteren Rand 11 der Sitzbank 3 und einem unteren Rand einer aus Übersichtlichkeitsgründen nicht gezeigten Rückenlehne in den Fahrzeuginnenraum geführt.

In die biegeschlaffe Gurtbandschlaufe 5 ist ein federelastisches Stützteil 13 integriert, das das Gurtschloss 1 in seiner Nichtgebrauchsstellung I gemäß der Fig. 1 eine vordefinierte Ablageposition aufzwingt. Das Gurtschloss 1 liegt in dieser Ablageposition mit seiner flachen Seite auf einer Sitzfläche 15 der Sitzbank 3.

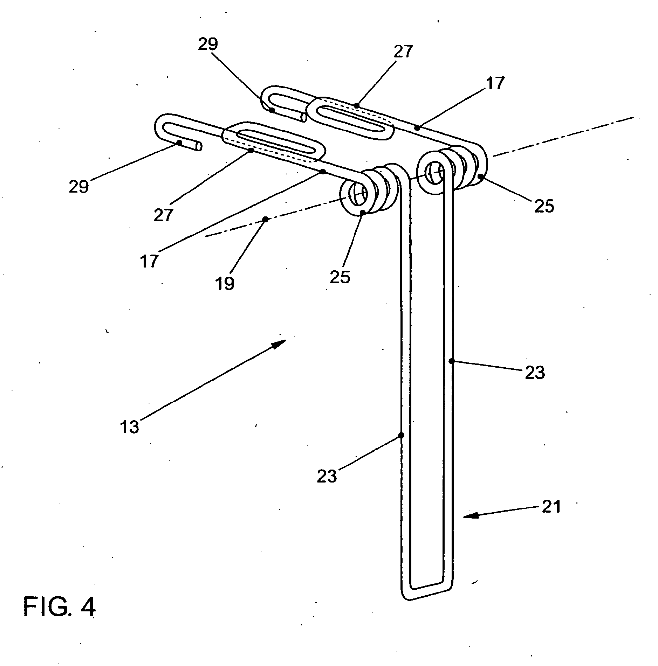

In der in der Fig. 1 gezeigten Nichtgebrauchsstellung I ist das federelastische Stützteil 13 in seiner Ruhelage, in der es in etwa um 90° abgewinkelt ist. Das Stützteil 13 ist vorliegend als ein einteiliges Drahtbiegeteil gefertigt. Wie aus der Fig. 4 hervorgeht, weist das Stützteil 13 zwei dem Gurtschloss 1 zugewandte Stützschenkel 17 aufweist, zwischen denen in Richtung einer Biegeachse 19 ein mittlerer, dem Beschlagteil 7 zugewandter Stützschenkel 21 angeordnet ist. Der Beschlagteil-Stützschenkel 21 ist U-förmig gestaltet. Die beiden Seitenstege 23 des U-förmigen Beschlagteil-Schenkels 21 gehen über Schraubenfederabschnitte 25 in die beiden seitlichen Gurtschloss-Schenkel 17 über. Die Windungen der beiden Federabschnitte 25 sind dabei fluchtend zur Biegeachse 19 ausgerichtet. In den beiden Gurtschloss-Schenkeln 17 ist jeweils ein erfindungsgemäßer Torsionsabschnitt 27 integriert, der hier beispielhaft als eine in den jeweiligen Stützschenkel 17 gebogene Windung ausgebildet ist. An ihren freien Enden weisen die beiden Gurtschloss-Stützschenkel 17 gemäß der Fig. 4 jeweils umgebogene Einhängeabschnitte 29 auf, um das Stützteil 13 in eine gehäuseseitige Aussparung 31 des Gurtschlosses 1 einzuhängen.

In seiner Einbaulage ist das Stützteil 13 mit seinem U-förmigen Beschlagteil-Schenkel 21 sowie mit den beiden Federabschnitten 25 zwischen zwei Lagen der Gurtbandschlaufe 5 vernäht. Die beiden Gurtschloss-Schenkel 17 sind gemäß den Fig. 1 bis 3 mit ihren jeweiligen Windungen 27 flach mit einer Auflagefläche 33 des Gurtbandschlosses in Anlage, während deren Einhängeabschnitte 29 einen unteren Rand der Aussparung 31 des Gurtschlosses 1 umgreifen.

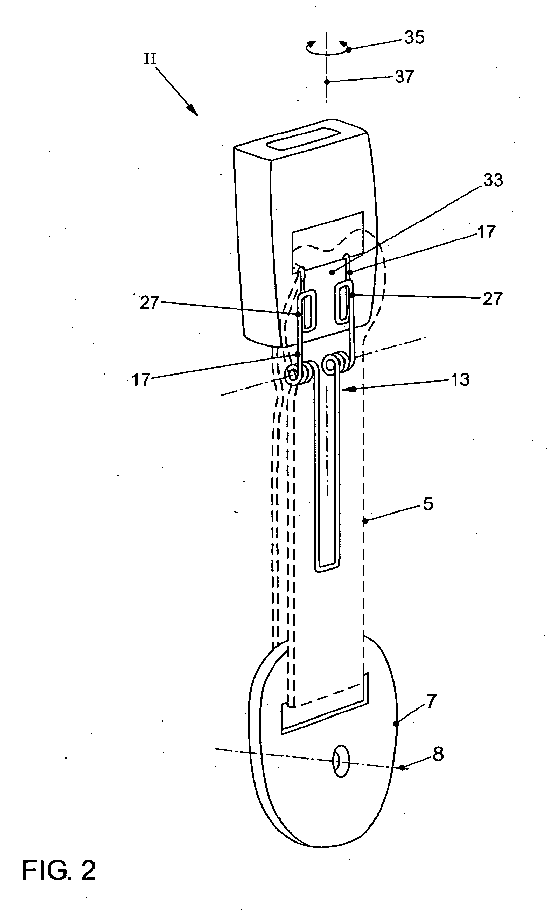

Wie bereits oben erwähnt, befindet sich in der Fig. 1 das Gurtschloss 1 in seiner Nichtgebrauchsstellung I. Zum Anlegen des Beckengurtes wird das Gurtschloss 1 vom Fahrzeuginsassen in eine Gebrauchsstellung II um etwa 90° hochgeklappt, wie es in der Fig. 2 gezeigt ist. Das Hochklappen erfolgt entgegen einer sich aufbauenden Rückstellkraft der Schraubenfederabschnitte 25. In der gezeigten Gebrauchsstellung II befinden sich die Stützschenkel 17, 21 in etwa in einer gemeinsamen Vertikalebene.

Für einen einwandfreien Sitz des angelegten Befestigungsgurtes ist eine leichtgängige Lageanpassung des in seiner hochgeklappten Gebrauchsstellung II befindlichen Gurtschlosses 1 von Bedeutung. Für eine solche Lageanpassung sind die beiden Gurtschloss-Stützschenkel 17 mit den als Windungen ausgeführten Torsionsabschnitten 27 versehen. Die Torsionsabschnitte 27 reduzieren eine Torsionssteifigkeit in einer angedeuteten Drehrichtung 35 um eine Torsionsachse 37. Die Torsionsachse 37 erstreckt sich mittig zwischen den beiden Gurtschloss-Stützschenkel 17 sowie quer zur Biegeachse 19.

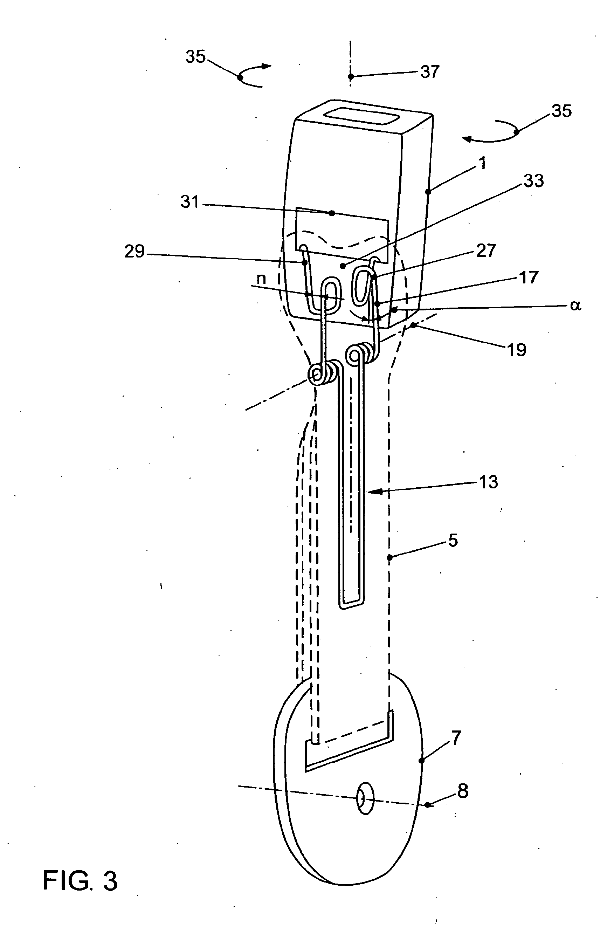

In der Fig. 3 ist das Gurtschloss 1 in seiner Gebrauchsstellung II um die Torsionsachse 37 in der Drehrichtung 35 um 90° gedreht. Durch ihre federnd nachgiebige Gestaltung als Feder-Windung können die beiden Torsionsabschnitte 27 den Drehweg des Gurtschlosses 1 durch den, ihnen zur Verfügung stehenden Federweg zumindest teilweise ausgleichen.

Dieser Ausgleich erfolgt gemäß der Fig. 3 durch ein Auseinanderbiegen der in der Fig. 3 gezeigten linken Windung, bei der sich eine Windungsluft n entsprechend vergrößert. Die in der Fig. 3 gezeigte rechte Windung wird demgegenüber gegen die Auflagefläche 33 des Gurtschlosses 1 gedrückt und um einen Biegewinkel α auseinander gebogen. Durch die elastische Verformung der Torsionsabschnitte 27 der beiden Gurtschloss-Stützschenkel 17 wird eine entgegen der Verdrehung gerichtete weitere Rückstellkraft auf das Gurtschloss 1 ausgeübt. Ebenso wird durch die elastische Verformung der beiden Torsionsabschnitte 27 das Verdrehen des Gurtschlosses 1 auf eine Weise ausgeglichen, dass das Stützteil 13 betriebssicher in der Aussparung 31 eingehängt bleibt und nicht mit seinen Einhängeabschnitten 29 aus der Gurtschloss-Aussparung 31 herausspringt. Die beiden Torsionsabschnitte 27 des Stützteiles 13 können daher bei einer durch Verdrehen um die Torsionsachse 37 aufgebrachten Biegespannung ausgleichen, wodurch auch im Dauereinsatz ein Ermüdungsbruch der beiden Gurtschloss-Stützschenkel 17 ausgeschlossen ist.

### Bezugszeichenliste

- 1: Gurtschloss
- 3: Sitzbank
- 5: Gurtband
- 7: Beschlagteil
- 8: Verschraubung
- 9: Halteöse
- 11: Rand
- 13: federelastisches Stützteil
- 15: Sitzfläche
- 17: Gurtschloss-Stützschenkel
- 19: Biegeachse
- 21: Beschlagteil-Stützschenkel
- 23: Seitenstege
- 25: Federabschnitte
- 27: Torsionsabschnitte
- 29: Einhängeabschnitte
- 31: Aussparung
- 33: Auflagefläche
- 35: Drehrichtung
- 37: Torsionsachse
- n: Windungsluft
- α: Biegewinkel
- I: Nichtgebrauchsstellung
- II: Gebrauchsstellung

## Patentansprüche

1. Gurtschloss-Befestigungsanordnung für ein Gurtschloss (1) eines Fahrzeuges, mit einem im wesentlichen biegeschlaffen Befestigungsband (5), das das Gurtschloss (1) mit einem Fahrzeugaufbau verbindet, und einem federelastischen Stützteil (13), das das Gurtschloss (1) um eine Biegeachse (19) auf einer Sitzfläche (15) im Fahrzeug vorpositioniert, **dadurch gekennzeichnet, dass** das-Stützteil (13) zumindest einen Torsionsabschnitt (27) aufweist, der im Vergleich zum verbleibenden Stützteil (13) eine reduzierte Torsionssteifigkeit aufweist.

2. Befestigungsanordnung nach Anspruch 1, **dadurch gekennzeichnet, dass** der Torsionsabschnitt (27) um eine quer zur Biegeachse (19) verlaufende Torsionsachse (37) nachgiebig ist.

3. Befestigungsanordnung nach Anspruch 1 oder 2, **dadurch gekennzeichnet, dass** das Stützteil (13) zumindest einen dem Fahrzeugaufbau zugewandten Stützschenkel (21) und zumindest einen dem Gurtschloss (1) zugewandten Stützschenkel (17) aufweist, die vorzugsweise in einer Nichtgebrauchsstellung (I) des Gurtschlosses (1) zueinander abgewinkelt sind.

4. Befestigungsanordnung nach Anspruch 3, **dadurch gekennzeichnet, dass** der Torsionsabschnitt (27) in dem, dem Gurtschloss (1) zugewandten Stützschenkel (27) des Stützteils (13) ausgebildet ist.

5. Befestigungsanordnung nach einem der vorhergehenden Ansprüche, **dadurch gekennzeichnet, dass** das Stützteil (13) ein Drahtbiegeteil ist.

6. Befestigungsanordnung nach einem der vorhergehenden Ansprüche, **dadurch gekennzeichnet, dass** der Torsionsabschnitt (27) als gebogener Abschnitt im Stützteil (13) ausgebildet ist, der die Torsionssteifigkeit des Stützteils (13) schwächt.

7. Befestigungsanordnung nach einem der vorhergehenden Ansprüche, **dadurch gekennzeichnet, dass** der Torsionsabschnitt (27) bei einer Torsion des Stützteils (13) eine Rückstellkraft auf das Stützteil (13) ausübt, und insbesondere elastisch nachgiebig gebildet ist.

8. Befestigungsanordnung nach einem der vorhergehenden Ansprüche, **dadurch gekennzeichnet, dass** der Torsionsabschnitt (27) zumindest eine Windung aufweist, die vorzugsweise quer zur Biegeachse (19) des Stützteils (13) ausgerichtet ist.

9. Befestigungsanordnung nach einem der vorhergehenden Ansprüche 3 bis 8,
**dadurch gekennzeichnet, dass** die beide Stützschenkel (17, 21) des Stützteiles (13) über zumindest eine Windung verbunden sind, die fluchtend zur Biegeachse (19) des Stützteils (13) ausgerichtet ist.

10. Befestigungsanordnung nach Anspruch 8. oder 9, **dadurch gekennzeichnet, dass** die Windung des Torsionsabschnittes (27) zumindest teilweise außenseitig in Anlage mit dem Gurtschloss (1) ist.

11. Befestigungsanordnung nach einem der Ansprüche 3 bis 10, **dadurch gekennzeichnet, dass** das Stützteil (13) zwei, dem Gurtschloss (1) zugewandte Stützschenkel (17) aufweist, zwischen denen in Richtung der Biegeachse (19) der dem Fahrzeugaufbau zugewandte Stützschenkel (21) angeordnet ist.

12. Befestigungsanordnung nach Anspruch 11, **dadurch gekennzeichnet, dass** zwischen den beiden, dem Gurtschloss (1) zugewandten Stützschenkel (17) die Torsionsachse (37) verläuft.

13. Befestigungsanordnung nach einem der vorhergehenden Ansprüche, **dadurch gekennzeichnet, dass** der zumindest eine, dem Gurtschloss (1) zugewandte Stützschenkel (17) des Stützteiles (13) endseitig einen Einhängeabschnitt (29) zum Einhängen in das Gurtschloss (1) aufweist.

14. Befestigungsanordnung nach einem der Ansprüche 8 bis 13, **dadurch gekennzeichnet, dass** bei einer Torsion des Stützteils (13) die Windung des Torsionsabschnittes (27) unter Vergrößerung einer Windungsluft (n) auseinanderbiegbar ist.

## Claims

1. Belt clip attachment assembly for a belt clip (1) of a vehicle, with a substantially flexurally slack attachment band (5) which connects the belt clip (1) to a vehicle body, and with a spring-elastic supporting part (13) which pre-positions the belt clip (1) about a bending axis (19) on a seat surface (15) in the vehicle, **characterized in that** the supporting part (13) has at least one torsional section (27) which has a reduced torsional rigidity in comparison to the remaining supporting part (13).

2. Attachment assembly according to Claim 1, **characterized in that** the torsional section (27) is flexible about a torsional axis (37) running transversely with respect to the bending axis (19).

3. Attachment assembly according to Claim 1 or 2, **characterized in that** the supporting part (13) has at least one supporting leg (21) facing the vehicle body and at least one supporting leg (17) facing the belt clip (1), said supporting legs preferably being angled with respect to each other in a non-use position (I) of the belt clip (1).

4. Attachment assembly according to Claim 3, **characterized in that** the torsional section (27) is formed **in that** supporting leg (27) of the supporting part (13) which faces the belt clip (1).

5. Attachment assembly according to one of the preceding claims, **characterized in that** the supporting part (13) is a bent wire part.

6. Attachment assembly according to one of the preceding claims, **characterized in that** the torsional section (27) is designed as a curved section in the supporting part (13), which section weakens the torsional rigidity of the supporting part (13).

7. Attachment assembly according to one of the preceding claims, **characterized in that** the torsional section (27) exerts a restoring force on the supporting part (13) when the supporting part (13) is subjected to torsion, and in particular is formed so as to be elastically flexible.

8. Attachment assembly according to one of the preceding claims, **characterized in that** the torsional section (27) has at least one loop which is preferably oriented transversely with respect to the bending axis (19) of the supporting part (13).

9. Attachment assembly according to one of the preceding Claims 3 to 8, **characterized in that** the two supporting legs (17, 21) of the supporting part (13) are connected via at least one loop which is oriented in alignment with the bending axis (19) of the supporting part (13).

10. Attachment assembly according to Claim 8 or 9, **characterized in that** the loop of the torsional section (27) is at least partially in contact on the outside with the belt clip (1).

11. Attachment assembly according to one of Claims 3 to 10, **characterized in that** the supporting part (13) has two supporting legs (17) which face the belt clip (1) and between which the supporting leg (21) facing the vehicle body is arranged in the direction of the bending axis (19).

12. Attachment assembly according to Claim 11, **characterized in that** the torsional axis (37) runs between the two supporting legs (17) which face the belt clip (1).

13. Attachment assembly according to one of the preceding claims, **characterized in that** the at least one supporting leg (17) of the supporting part (13), which supporting leg faces the belt clip (1), has, on the end side, a hook-in section (29) for hooking into the belt clip (1).

14. Attachment assembly according to one of Claims 8 to 13, **characterized in that**, when the supporting part (13) is subjected to torsion, the loop of the torsional section (27) can be bent apart, increasing (a) loop clearance (s)

## Revendications

1. Agencement de fixation d'une attache de ceinture pour une attache de ceinture (1) d'un véhicule, comprenant une bande de fixation (5) essentiellement flexible, qui relie l'attache de ceinture (1) à une caisse du véhicule, et une partie de support élastique à ressort (13), qui pré-positionne l'attache de ceinture (1) autour d'un axe de flexion (19) sur une surface de siège (15) dans le véhicule, **caractérisé en ce que** la partie de support (13) présente au moins une portion de torsion (27) qui présente, par rapport à la partie de support restante (13), une rigidité en torsion réduite.

2. Agencement de fixation selon la revendication 1, **caractérisé en ce que** la portion de torsion (27) est flexible autour d'un axe de torsion (37) s'étendant transversalement à l'axe de flexion (19).

3. Agencement de fixation selon la revendication 1 ou 2, **caractérisé en ce que** la partie de support (13) présente au moins une branche de support (21) tournée vers la caisse du véhicule et au moins une branche de support (17) tournée vers l'attache de ceinture (1), lesquelles sont coudées l'une par rapport à l'autre de préférence dans une position de non utilisation (I) de l'attache de ceinture (1).

4. Agencement de fixation selon la revendication 3, **caractérisé en ce que** la portion de torsion (27) est réalisée dans la branche de support (27) de la partie de support (13) tournée vers l'attache de ceinture (1).

5. Agencement de fixation selon l'une quelconque des revendications précédentes, **caractérisé en ce que** la partie de support (13) est une partie flexible en fil métallique.

6. Agencement de fixation selon l'une quelconque des revendications précédentes, **caractérisé en ce que** la portion de torsion (27) est réalisée sous forme de portion cintrée dans la partie de support (13), qui amoindrit la rigidité en torsion de la partie de support (13).

7. Agencement de fixation selon l'une quelconque des revendications précédentes, **caractérisé en ce que** la portion de torsion (27) exerce une force de rappel sur la partie de support (13) dans le cas d'une torsion de la partie de support (13), et est formée notamment de manière élastiquement flexible.

8. Agencement de fixation selon l'une quelconque des revendications précédentes, **caractérisé en ce que** la portion de torsion (27) présente au moins un enroulement qui est orienté de préférence transversalement à l'axe de flexion (19) de la partie de support (13).

9. Agencement de fixation selon l'une quelconque des revendications 3 à 8, **caractérisé en ce que** les deux branches de support (17, 21) de la partie de support (13) sont reliées par le biais d'au moins un enroulement, qui est orienté en alignement avec l'axe de flexion (19) de la partie de support (13).

10. Agencement de fixation selon la revendication 8 ou 9, **caractérisé en ce que** l'enroulement de la portion de torsion (27) est au moins en partie en appui du côté extérieur avec l'attache de ceinture (1).

11. Agencement de fixation selon l'une quelconque des revendications 3 à 10, **caractérisé en ce que** la partie de support (13) présente deux branches de support (17) tournées vers l'attache de ceinture (1), entre lesquelles est disposée, dans la direction de l'axe de flexion (19), la branche de support (21) tournée vers la caisse du véhicule.

12. Agencement de fixation selon la revendication 11, **caractérisé en ce qu'**entre les deux branches de support (17) tournées vers l'attache de ceinture (1) s'étend l'axe de torsion (37).

13. Agencement de fixation selon l'une quelconque des revendications précédentes, **caractérisé en ce que** l'au moins une branche de support (17) de la partie de support (13) tournée vers l'attache de ceinture (1) présente du côté de l'extrémité une portion d'accrochage (29) pour accrocher l'attache de ceinture (1).

14. Agencement de fixation selon l'une quelconque des revendications 8 à 13, **caractérisé en ce que** dans le cas d'une torsion de la partie de support (13), l'enroulement de la portion de torsion (27) peut être écarté par flexion en augmentant un entrefer d'enroulement (n).
